# EUROPÄISCHE PATENTSCHRIFT

(11) **EP 0 623 099 B1**
(45) Veröffentlichungstag und Bekanntmachung des Hinweises auf die Patenterteilung: **28.01.1998**
(21) Anmeldenummer: 94900039.2
(22) Anmeldetag: 09.11.1993
(51) Int. Cl.: C02F 3/30, C02F 1/28

(54) **VERFAHREN ZUR BIOLOGISCHEN REINIGUNG VON MIT ORGANISCHEN KOHLENSTOFFVERBINDUNGEN UND STICKSTOFFVERBINDUNGEN VERUNREINIGTEM ABWASSER**
BIOLOGICAL METHOD FOR PURIFYING WASTE WATER CONTAMINATED WITH ORGANIC CARBON AND NITROGEN COMPOUNDS
PROCEDE D'EPURATION BIOLOGIQUE D'EAUX USEES POLLUEES PAR DES COMPOSES HYDROCARBURE ORGANIQUES ET PAR DES COMPOSES AZOTES

(30) Priorität: 09.11.1992 DE 4237716
(43) Veröffentlichungstag der Anmeldung: 09.11.1994
(73) Patentinhaber: Saarberg-Interplan, Gesellschaft für Rohstoff-, Energie- und Ingenieurtechnik mbH, 66115 Saarbrücken (DE)
(72) Erfinder: GEIGER, Markus, D-66583 Spiesen-Elversberg (DE)
(86) Internationale Anmeldenummer: DE9301068
(87) Internationale Veröffentlichungsnummer: WO9411314

(56) Entgegenhaltungen:
- DE-A- 3 933 513
- FR-A- 2 023 827
- PATENT ABSTRACTS OF JAPAN vol. 16, no. 1 (C-899)(5044) 7. Januar 1992 & JP,A,03 229 693 (NGK INSULATORS LTD) 11. Oktober 1991
- DATABASE WPI Week 7907, Derwent Publications Ltd., London, GB; AN 79-13405B & JP,A,54 004 462 (ISHIKAWAJIMA-HARIMA HEAV) 13. Januar 1979
- DATABASE WPI Week 8104, Derwent Publications Ltd., London, GB; AN 81-04502D & JP,A,55 147 197 (MITSUBISHI HEAVY IND K.K.) 16. November 1980

## Beschreibung

Die Erfindung betrifft ein Verfahren zur biologischen Reinigung von mit organischen Kohlenstoffverbindungen und Stickstoffverbindungen verunreinigtem Abwasser, bei dem die Stickstoffverbindungen zunächst in einer aeroben Behandlungsstufe nitrifiziert und anschließend in einer anoxischen Behandlungsstufe vorzugsweise zu molekularem Stickstoff denitrifiziert werden, wobei vor Eintritt in die aerobe Behandlungsstufe zumindest ein Teil der Kohlenstoffverbindungen aus dem Abwasser abgetrennt und die abgetrennten Kohlenstoffverbindungen zumindest teilweise dem in der zweiten Behandlungsstufe anoxisch zu behandelnden Abwasser erneut zugesetzt werden.

Es ist bekannt, daß in die Gewässer gelangte Stickstoffverbindungen in beträchtlichem Ausmaß für die Verschmutzung unserer Flüsse, Seen und Meere mit verantwortlich sind. Ein wesentlicher Teil der zur Eutrophierung der Gewässer beitragenden als Nährstoffe wirkenden Stickstoffverbindungen wird mit kommunalem und industriellem Abwasser in die Flüsse geleitet. Es stellt daher eine für die Reinhaltung der Gewässer vordringliche Aufgabe dar, Kläranlagen so auszurüsten, daß neben den organischen Kohlenstoffverbindungen auch die Stickstoffverbindungen eliminiert werden können.

Aus "Weitergehender Abwasserreinigung", Helmer, Sekoulov, erste Auflage, 1977, Seite 35 bis 79, ist es bekanntgeworden, daß Stickstoffverbindungen aufweisendes Wasser durch Hintereinanderschaltung einer aeroben und einer anoxischen Behandlungsstufe bei Anwesenheit bestimmter Mikroorganismen entstickt werden kann. Der im Abwasser vorhandene Ammoniumstickstoff und/oder der in dreiwertiger Form vorliegende organische gebundene Stickstoff wird in zwei Stufen durch extrem stark spezialisierte autotrophe Mikroorganismengruppen, die sogenannten Nitrifikanten, oxidiert (Nitrifikation). Liegt der Stickstoff organisch gebunden vor, z. B. Harnstoff, so findet zunächst eine Hydrolyse zu Ammoniumsticksoff statt (Ammonifizierung). Zur ersten Gruppe der Stickstoffoxidierer gehört die Bakteriengattung Nitrosomonas, die das Ammonium zu Nitrit oxidiert. Der zweiten Gruppe gehören die Nitrobacter an, die das Nitrit zu Nitrat weiter oxidieren. Die Nitrifikanten benötigen für ihre Tätigkeit Sauerstoff, d. h. sie brauchen aerobe Bedingungen.

Andererseits ist ein großer Teil von heterotrophen Bakterien in der Lage, unter anoxischen Bedingungen, d. h. bei Abwesenheit von gelöstem Sauerstoff von Sauerstoffatmung auf Nitratatmung überzugehen. Die unter anoxischen Bedingungen gehaltenen Bakterien reduzieren bei Anwesenheit von Kohlenstoff das Nitrat zu elementarem Stickstoff, der einfach an die Atmosphäre abgegeben werden kann (Denitrifikation). Durch Hintereinanderschaltung einer aeroben und einer anoxischen Behandlungsstufe können also die Stickstoffverbindungen prinzipiell aus dem Abwasser entfernt werden, sofern es gelingt, die unterschiedlichen Milieuanforderungen der verschiedenen Mikroorganismengruppen in den aeroben und anoxischen Behandlungsstufen durch eine entsprechende Verfahrensführung der Abwasserreinigung miteinander in Einklang zu bringen.

Aus den Druckschriften JP-A-03 229 693, JP-A-54 004 462, JP-A-55 147 197 und DE-A- 39 33 513 sind Verfahren der eingangsgenannten Art bekannt geworden, bei denen die Abtrennung von Kohlenstoffverbindungen im vorliegenden Falle Schlamm, jeweils in Sedimentations- bzw. Absetzbecken erfolgt. Dabei kann es erforderlich werden, zusätzliche verfahrensfremde Betriebsstoffe, wie z. B. Flotationsmittel, einzusetzen.

Der vorliegenden Erfindung liegt demnach die Aufgabe zugrunde, ein Verfahren der eingangs genannten Art so weiterzuentwickeln, daß auf technisch einfache und wirtschaftliche Weise eine definierte und flexible Entfernung sowohl der organischen Kohlensotffverbindungen als auch der Stickstoffverbindungen aus dem Abwasser erreicht wird.

Diese Aufgabe wird erfindungsgemäß dadurch gelöst, daß zur Abtrennung der organischen Kohlenstoffverbindungen jeweils zwei oberflächenaktive Adsorber eingesetzt werden, wobei während der Beladungsphase des einen Adsorbers der jeweils andere in die anoxische Behandlungsstufe entladen wird.

Durch den erfindungsgemäßen Vorschlag gelingt es auf einfache Weise, die jeweils erforderlichen Milieubedingungen für die Mikroorganismen in den verschiedenen Behandlungsstufen für das Abwasser scharf einzustellen. Durch den vorgeschlagenen Einsatz wechselweise geschalteter oberflächenaktiver Adsorber lassen sich im kontinuierlichen Betrieb sowohl bei der Abtrennung der Kohlenwasserstoffe und damit im Hinblick auf die Nitrifikation als auch bei der Entladung der Adsorber und damit im Hinblick auf die Denitrifikation exakt definierte Verfahrensbedingungen einstellen, die sich jeweils für beide Behandlungsstufen als optimal erweisen. Geeignete Adsorptionsmittel sind Aktivkohle oder auch polymerische Adsorptionsmittel, wie sie beispielsweise unter den Handelsnamen Amberlite XAD-2 bzw. Amberlite XAD-4 bekannt geworden sind.

Insbesondere bei kleinen Anlagen kann es sich auch als sinnvoll erweisen, die zweite, d. h. die anoxische Behandlungsstufe direkt in den zu entladenden Adsorber zu integrieren, d. h., die anoxischen Milieubedingungen für die Denitrifikation werden direkt in den zu entladenden Adsorber eingestellt.

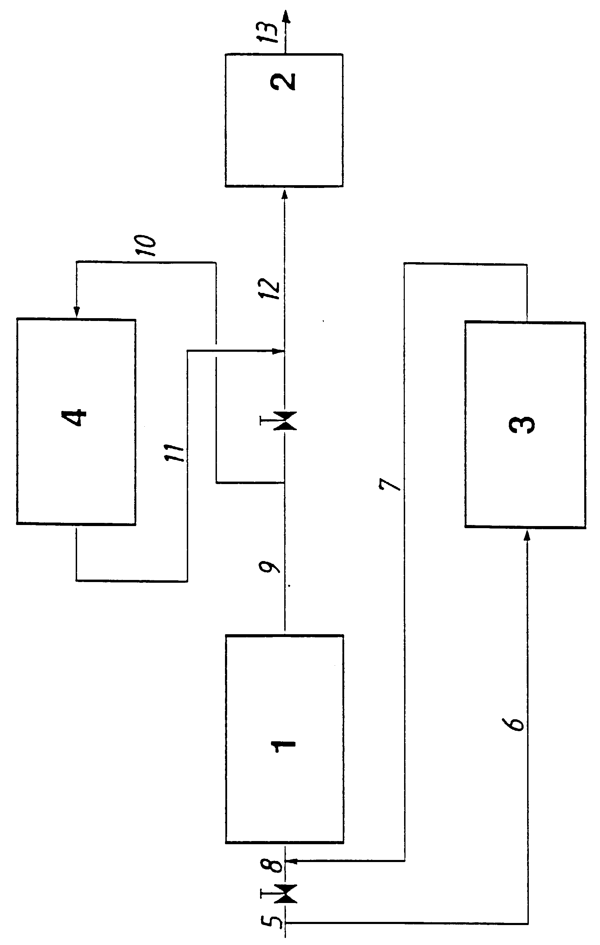

Weitere Erläuterungen zu der Erfindung sind dem in der Figur schematisch dargestellten Ausführungsbeispiel zu entnehmen.

Die in der Figur schematisch dargestellte Abwasseranlage besteht aus einer ersten aeroben Behandlungsstufe 1 zur Nitrifikation der im Abwasser enthaltenen Stickstoffverbindungen, einer zweiten Behandlungsstufe 2, in der unter anoxischen Bedingungen die nitrifizierten Stickstoffverbindungen denitrifiziert werden, sowie aus den beiden wechselweise geschalteten Adsorbern 3 und 4.

Beim Betrieb einer derartigen Anlage wird das über eine Leitung 5 zuströmende Abwasser, welches sowohl mit Stickstoffverbindungen als auch mit organischen Kohlenstoffverbindungen angereichert ist, zum Teil über eine Leitung 6 zunächst dem auf Aktivkohlebasis arbeitenden Adsorber 3, in den die Kohlenstoffverbindungen aus dem Abwasser abgetrennt werden, zugeführt.

Der Überlauf des Adsorbers 3 strömt dann über Leitungen 7 und 8 in die aerobe Behandlungsstufe 1 der Abwasseranlage. Aufgrund der Abwesenehit der Kohlenstoffverbindungen lassen sich in dieser Stufe optimale Milieubedingungen für die die Nitrifikation der Stickstoffverbindungen bewirkenden Bakterien einstellen.
Der Überlauf der ersten Behandlungsstufe 1 wird nach dem erfindungsgemäßen Verfahren nunmehr über die Leitungen 9 und 10 dem in einer früheren Schaltphase beladenen Adsorber 4 zugeführt. Dabei werden die Bedingungen (Druck, Temperatur) im Adsorber 4 so eingestellt, daß dieser gespült, d. h. entladen wird. Das nunmehr auch mit Kohlenstoffverbindungen angereicherte Abwasser gelangt anschließend über die Leitungen 11 und 12 in die anoxische Behandlungsstufe 2 der Abwasserreinigungsanlage, in der nunmehr auch unter optimalen Bedingungen für die entsprechenden Mikroorganismen im Stoffaustausch mit den Kohlenstoffverbindungen die Denitrifikation der Stickstoffverbindungen erfolgt. Das sowohl von Stickstoffverbindungen als auch von Kohlenstoffverbindungen weitgehend befreite Abwasser wird dann über ein Leitung 13 aus der Anlage abgezogen.

## Patentansprüche

1. Verfahren zur biologischen Reinigung von mit organischen Kohlenstoffverbindungen und Stickstoffverbindungen verunreinigtem Abwasser, bei dem die Stickstoffverbindungen zunächst in einer aeroben Behandlungsstufe nitrifiziert und anschließend in einer anoxischen Behandlungsstufe vorzugsweise zu molekularem Stickstoff denitrifiziert werden, wobei vor Eintritt in die aerobe Behandlungsstufe zumindest ein Teil der Kohlenstoffverbindungen aus dem Abwasser abgetrennt und die abgetrennten Kohlenstoffverbindungen zumindest teilweise dem in der zweiten Behandlungsstufe anoxische zu behandelnden Abwasser erneut zugesetzt werden, dadurch gekennzeichnet, daß zur Abtrennung der organischen Kohlenstoffverbindungen jeweils zwei oberflächenaktive Adsorber eingesetzt werden, wobei während der Beladungsphase des einen Adsorbers der jeweils andere in die anoxische Behandlungsstufe entladen wird.

2. Verfahren nach Anspruch 1, dadurch gekennzeichnet, daß die anoxische Behandlungsstufe jeweils in den zu entladenden Adsorber integriert wird.

3. Verfahren nach den Ansprüchen 1 oder 2, dadurch gekennzeichnet, daß die Zufuhr der Kohlenstoffverbindungen in die anoxische Behandlungsstufe in Abhängigkeit des Kohlenstoffbedarfs der dort eingesetzten Mikroorganismen geregelt wird.

## Claims

1. Process for biological purification of waste water contaminated with organic carbon compounds and nitrogen compounds, wherein the nitrogen compounds are initially nitrified in an aerobic treatment stage and then de-nitrified in an anoxic treatment stage, preferably to form molecular nitrogen, whereby prior to entering the aerobic treatment stage at least one part of the carbon compounds is separated from the waste water and the separated carbon compounds are at least partially added again to the anoxic waste water to be treated in the second treatment stage, characterised in that two surface-active adsorbers are used in each case for separation of the organic carbon compounds, whereby during the charging phase of one adsorber the other adsorber is discharged into the anoxic treatment stage.

2. Process according to claim 1, characterised in that the anoxic treatment stage is in each case integrated into the adsorber to be discharged.

3. Process according to claims 1 or 2, characterised in that the supply of carbon compounds to the anoxic treatment stage is controlled according to the carbon demand of the micro-organisms employed there.

## Revendications

1. Procédé d'épuration biologique d'eau résiduaire polluée par des composés carbonés organiques et des composés d'azote, où on nitrifie d'abord les composés de l'azote dans une étape de traitement aérobie et ensuite on dénitrifie dans une étape de traitement anoxique de préférence en azote moléculaire, où avant l'entrée dans l'étape de traitement aérobie on sépare de l'eau résiduaire au moins une partie des composés carbonés et on ajoute les composés carbonés séparés au moins partiellement à l'eau résiduaire à traiter anoxiquement à la deuxième étape de traitement,
caractérisé en ce que
pour séparer les composés carbonés organiques on utilise respectivement deux adsorbeurs tensioactifs, où pendant la période de charge d'un adsorbeur l'autre respectivement est déchargé au cours de l'étape de traitement anoxique.

2. Procédé selon la revendication 1,
caractérisé en ce que
l'étape de traitement anoxique est intégrée respectivement dans l'adsorbeur à décharger.

3. Procédé selon les revendications 1 ou 2,
caractérisé en ce qu'
on régule l'introduction des composés carbonés à l'étape de traitement anoxique en fonction du besoin en carbone des micro-organismes qui y sont mis en oeuvre.
